(19) **Europäisches Patentamt / European Patent Office / Office européen des brevets**

(11) **EP 2 025 656 A1**

(12) **EUROPEAN PATENT APPLICATION**
published in accordance with Art. 153(4) EPC

(43) Date of publication:
**18.02.2009 Bulletin 2009/08**

(51) Int Cl.:
**C04B 35/52** (2006.01)    **C01B 31/02** (2006.01)

(21) Application number: **07742830.8**

(22) Date of filing: **02.05.2007**

(86) International application number:
**PCT/JP2007/059395**

(87) International publication number:
**WO 2007/126118 (08.11.2007 Gazette 2007/45)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.05.2006 JP 2006128605**
**20.02.2007 JP 2007039613**

(71) Applicant: **Kurosaki, Fumio**
**Utsunomiya-shi**
**Tochigi 320-0036 (JP)**

(72) Inventor: **KOYANAKA, Hideki,**
**Sakyo-ku, Kyoto-shi, Kyoto 6068231 (JP)**

(74) Representative: **Calamita, Roberto**
**Frank B. Dehn & Co.**
**St Bride's House**
**10 Salisbury Square**
**London**
**EC4Y 8JD (GB)**

(54) **MACROPOROUS CARBON MATERIAL AND MESOPOROUS CARBON MATERIAL PRODUCED BY USING WOOD MATERIAL AS RAW MATERIAL, METHOD FOR PRODUCTION OF THE CARBON MATERIALS, POROUS METAL CARBON MATERIAL, AND METHOD FOR PRODUCTION OF THE POROUS METAL CARBON MATERIAL**

(57)    By controlling the heating speed and the pressure in carbonizing a wood powder, a macroporous carbon material is formed. Herein provided are the macroporous carbon material starting from a wood material, and a method for producing it.

Fig.1

**Description**

TECHNICAL FIELD

The present invention relates to a macroporous carbon material and a mesoporous carbon material starting from a wood material, to a method for producing them, to a porous metal carbon material and to a method for producing it.

BACKGROUND ART

A macroporous material is a generic term for a porous material having a mean pore diameter of at least 50 nm, and taking advantage of its structure and the properties of its surface, the material is utilized in various fields as heat-insulating materials, buffer materials, sound absorbent materials, adsorbent materials and catalyst carriers. Above all, a macroporous material formed of a carbon material has characteristics such as high electric conductivity, lightness in weight, heat resistance, chemical resistance and the like, which any other macroporous materials do not have. Accordingly, the macroporous carbon material has wide-range applications for heat-insulating materials, heat exchangers, filters, ceramic sintering tools, glass shaping tools, various electrodes for fuel cells, special adsorbents, various catalyst carriers, filters for vapor filtration, and others (e.g., see Non-Patent References 1, 2).

However, the macroporous carbon material now in practical use is produced in an expensive and complicated production method of heating and carbonizing, as a starting material, a porous material of polyurethane or the like obtained through purification of petroleum, or a material prepared by infiltrating a thermosetting resin or an easily-graphitizing carbon pitch into a fibrous material of cellulose, carbon fibers or the like and curing it therein. As well known, polyurethane, carbon fibers, thermosetting resin and the like are substances produced from a fossil fuel source such as petroleum, and are therefor problematic in that not only their material costs are greatly influenced by the petroleum cost fluctuation but also their production processes are complicated and expensive and that the load for environmental protection is great in treating exhaust gases, organic solvents and others in the process of production and post-treatment.

On the other hand, there are massive resources for wood materials, including domestic wood materials of typically cedar and, as regenerable biomass resources, raw wood materials and waste wood materials. Accordingly, it may be taken into consideration to produce a macroporous carbon material by the use of such wood resources. However, the macroporous carbon material starting from a wood material produced according to a conventional method is only a macroporous carbon material having the cell structure of the starting wood material, and there is known no example of producing a macroporous carbon material of which the porousness such as the mean pore diameter and the porosity thereof is controlled. The macroporous carbon material from a conventional wood material has anisotropy and pore size unevenness resulting from the starting wood material (Non-Patent Reference 3).

As opposed to this; the present applicant has found that the heating condition change in carbonizing a wood material by the use of a small-size furnace attached to a gas chromatograph changes the cell structure of the starting wood powder (Non-Patent Reference 4). In that situation, the inventors of the present application have investigated in detail the density of the starting wood powder, the heating speed, the pressure in the heating furnace, the shapability and others, and further investigated techniques for producing a macroporous carbon material having the ability of being shaped into desired forms, while controlling the uniform macroporous structure thereof.

Non-Patent Reference 1: Properties and Application Techniques of Porous Materials, Fuji Technosystems, ISBN4-938555-69-7, pp. 48-49
Non-Patent Reference 2: M. Calvo et al., Fuel, Vol. 84, 2005, pp. 2184-2189 (2005)
Non-Patent Reference 3: Kitamura et al., the Journal of the Wood Society of Japan, Vol. 47, Issue 2, 2001, pp. 164-170 (2001)
Non-Patent Reference 4: F. Kurosaki et al., Carbon, Vol. 41, Issue 15, 2003, pp. 3057-3062 (2003)

DISCLOSURE OF THE INVENTION

PROBLEMS THAT THE INVENTION IS TO SOLVE

The present invention has been made in the above-mentioned background, and its object is to provide a macroporous carbon material, starting from a wood material that exists in large quantities as a regenerable biomass resource and is required to be used effectively, of which the porousness such as the mean pore diameter and the porosity thereof, the bending strength and the compression strength are controlled not limited by the cell structure of the starting wood material; and to provide a novel method capable of producing it at low cost.

MEANS FOR SOLVING THE PROBLEMS

The invention is to solve the above-mentioned problems and is characterized by the following:

First: A method for producing a macroporous carbon material by heating and carbonizing a wood powder in an inert gas atmosphere, wherein the mean particle size of the powder is within a range of from 20 to 125 $\mu$m, the particle size distribution thereof is within a range of (mean particle size $\pm$ 50 $\mu$m), the heating speed is within a range of from 1 to 150°C/sec.

Second: In the above method, the carbonization heating is attained under pressure over atmospheric pressure.

Third: The wood powder is filled in a mold and heated for carbonization thereby giving a molded carbon material.

Fourth: The wood powder is a cedar powder.

Fifth: The wood powder is heated for carbonization and then further heated at a high temperature in an inert gas atmosphere.

Sixth: The macroporous carbon material produced according to any of the above-mentioned methods is further heated in air to give a mesoporous carbon material.

Seventh: The carbon material produced according to any of the above-mentioned methods is, serving as a cathode, electroplated and then this is heated in air to remove the carbon material thereby to give a metal material having a porous structure.

Eighth: A macroporous carbon material having a mean pore diameter of from 1 to 60 $\mu$m, a bulk density of from 0.04 to 0.50 g/cm$^3$, a porosity of from 75 to 99 %, and having a three-dimensional network structure or a three-dimensional foam structure.

Ninth: The macroporous carbon material has a compression strength falling within a range of from 0.01 to 40.00 MPa.

Tenth: The macroporous carbon material has a bending strength falling within a range of from 0.01 to 40.00 MPa.

Eleventh: The macroporous carbon material has a volume resistivity falling within a range of from $1.0 \times 10^{-4}$ to $1.0 \times 10^{-1}$ $\Omega \cdot$m.

Eleventh: A mesoporous carbon material having a mean pore diameter of from 2 to 50 nm.

Twelfth: A mesoporous carbon material obtained according to the method of the above-mentioned sixth invention.

Thirteenth: A porous metal material having a mean pore diameter of from 1 to 60 $\mu$m.

Fourteenth: A porous metal material obtained according to the method of the above-mentioned seventh invention.

EFFECT OF THE INVENTION

According to the present invention as in the above, a macroporous carbon material, a mesoporous carbon material and a porous metal material of which the pore shape and the pore size are controlled according to the purpose of use thereof can be produced inexpensively in a simplified manner. Further, according to the invention, a macroporous carbon material, a mesoporous carbon material and a porous metal material having a three-dimensional network or foam structure of good isotropy can be produced. The materials having such a three-dimensional network structure are expected to have broad-range applications for various filters and catalyst carriers.

BEST MODE FOR CARRYING OUT THE INVENTION

The present invention is characterized by the above, and its embodiments are described below.

<1> A wood material is used as the starting material.

A wood material exists in large quantities as a resource, and in consideration of the amount to be generated from it as construction wastes and others, it is inexpensive as compared with the carbon material resourced from fossil fuel and, in addition, since it does not contain substances harmful to the environment such as nitrogen and sulfur, future technical development of using it as a carbon resource is expected.

The invention is **characterized in that** a wood material having such excellent characteristics is used as the starting material to produce inexpensively a macroporous carbon material. The type of the wood material is not specifically defined, including broadleaf trees, coniferous trees, their processed materials and others.

Of such various wood species, the cedar resource stockpile in Japan is extremely large and its supply cost is low and, in addition, cedar is **characterized in that** it does not almost contain nitrogen and sulfur atoms, it has a small density and it may be readily powdered; and therefore, it may be favorably taken into consideration to utilize cedar as a starting material. Using a cedar powder, a macroporous carbon material may be produced more inexpensively. In the invention, as a wood material except cedar, also usable is poplar, a type of broadleaf tree. In addition, a powder of lignin and cellulose, main ingredients of a wood material, may also be used to produce a macroporous carbon material.

<2> A wood material is powdered and used as a starting material, and a uniform and isotropic macroporous carbon material is produced.

In general, in case where a macroporous carbon material is produced starting from a wood material, the macroporous carbon material after heating for carbonization keeps the cell texture structure of the wood material directly as it is. Accordingly, the conventional macroporous carbon material has anisotropy and pore size unevenness derived from the starting material.

As a means for solving the problems of the anisotropy and the pore size unevenness, the starting material is powdered and processed in the carbonization step in the invention. In this stage, the shape and the particle size of the powder are previously unified and dressed by sifting or the like, whereby the pores and the pore sizes of the carbon material to be obtained finally may be controlled.

In the invention, the particle size of the wood powder falls within a range of from 20 to 125 $\mu$m in terms of the mean particle size thereof, and the particle size distribution thereof falls within a range of plus/minus 50 $\mu$m of the mean particle size. Use of the powder having such uniformity is one significant characteristic of the invention. In case where the mean particle size of the starting powder is less than 20 $\mu$m, the combustion gas generated in heating could hardly diffuse out of the starting material powder being heated, and therefore the carbon material to be obtained finally may have cracks or bubbles formed inside it. When more than 125 $\mu$m, then the voids between the starting wood powder particles may be great and the structure of the carbon material to be finally obtained may be brittle and may be readily broken, and therefore the shapability of the carbon material may worsen.

<3> The filling bulk density of the starting wood powder is controlled, and the bulk density of the macroporous carbon material to be obtained after carbonization is thereby controlled.

When the filling bulk density of the starting wood powder to be filled in a reactor is smaller, then the bulk density of the carbon material to be obtained may be smaller. For example, when a cedar powder (having a mean particle size of 50 $\mu$m) is, at a filling bulk density of 0.25 g/cm$^3$, heated at a heating speed of 50°C/sec and kept at 800°C for 1 hour in an inert gas atmosphere such as a nitrogen gas under atmospheric pressure, and thereafter naturally cooled, then a macroporous carbon material having a bulk density of 0.12 g/cm$^3$ can be produced. As opposed to this, when the same cedar powder is, at a filling bulk density of 0.50 g/cm$^3$, processed under the same condition, then a macroporous carbon material having a bulk density of 0.22 g/cm$^3$ can be produced. When the same cedar powder is, at a filling bulk density of 0.75 g/cm$^3$, processed under the same condition, then a macroporous carbon material having a bulk density of 0.37 g/cm$^3$ can be produced. As in the above, by increasing the filling bulk density of the starting material to be filled in a reactor, the bulk density of the macroporous carbon material to be obtained can be increased and controlled.

<4> The filling bulk density of the starting wood powder is controlled, and the strength of the macroporous carbon material to be obtained after carbonization is thereby controlled.

When the filling bulk density of the starting wood powder to be filled in a reactor is larger, then the bending strength of the carbon material to be obtained may be larger. For example, when a cedar powder (having a mean particle size of 50 $\mu$m) is, at a filling bulk density of 0.25 g/cm$^3$, heated at a heating speed of 50°C/sec and kept at 800°C for 1 hour in an inert gas atmosphere such as a nitrogen gas under atmospheric pressure, and thereafter naturally cooled, then a macroporous carbon material having a bending strength of 0.49 MPa can be produced. As opposed to this, when the same cedar powder is, at a filling bulk density of 0.50 g/cm$^3$, processed under the same condition, then a macroporous carbon material having a bending strength of 5.78 MPa can be produced. When the same cedar powder is, at a filling bulk density of 0.75 g/cm$^3$, processed under the same condition, then a macroporous carbon material having a bending strength of 15.11 MPa can be produced. As in the above, by increasing the filling bulk density of the starting material to be filled in a reactor, the bulk density of the macroporous carbon material to be obtained can be increased and controlled.

<5> In the carbonization step, the heating speed of the reaction system in heating is controlled, and the porous structure such as the porosity and the pore size after carbonization is controlled.

Heretofore, in case where a macroporous carbon material is produced starting from a wood material, the heating speed in the carbonization step is 0.1 °C/sec or so and is low. Accordingly, even though the particle size of the wood powder is thinned, a macroporous carbon material still keeping the shape and the micrometer-size structure that the wood powder has is inevitably produced. As opposed to this, in the invention, the heating speed of the reaction system in heating it is set high to fall within a range of from 1 to 150°C/sec. In the invention, this is referred to as a rapid heating method. More preferably, the heating speed is within a range of from 10 to 100°C/sec. Accordingly, the latitude in controlling the porousness such as the porosity, the pore size and the bulk density of the macroporous carbon material to be obtained after carbonization may be broadened, as compared with those produced in conventional methods, whereby a three-dimensional network structure or a three-dimensional foam structure is formed in the material.

Specifically, the heating speed in the rapid heating method has some influences on the number and the size of crosslinks and further on the formation of the three-dimensional network structure or the three-dimensional foam structure.

The heating is continued up to a predetermined carbonization heating temperature, and in this case, the predetermined carbonization heating temperature may vary depending on the type and the particle size of the wood material and others, but in general, it may fall within a range of from 500 to 1200°C, and it may be taken into consideration to keep a constant temperature within 3 hours.

After the heating at the carbonization temperature, the material may be kept naturally cooled.

For example, for obtaining a best macroporous carbon material by the use of a cedar powder, the following may be employed. Concretely, a cedar powder (having a mean particle size of 50 $\mu$m) is filled at a filling bulk density of from 0.25 to 1.25 g/cm$^3$, then heated at a heating speed of from 10 to 100°C/sec and kept at 800°C for 1 hour, and then naturally cooled, whereby a macroporous carbon material having a mean pore diameter (mean pore diameter according to a mercury intrusion method) of from 1 $\mu$m to 60 $\mu$m, a bulk density of from 0.04 to 0.50 g/cm$^3$ can be produced.

In this, when the heating speed is lower than 1°C/sec, the texture structure of the starting wood powder may partly remain in the macroporous carbon material produced. In case where the macroporous carbon material thus has the texture structure of the starting wood powder, it could not have a three-dimensional network structure or a three-dimensional foam structure therein, and therefore the macroporous structure thereof is brittle and is readily broken and the shapability thereof is poor. On the other hand, when the heating speed is higher than 150°C/sec, then the yield of the macroporous carbon material to be obtained is greatly lowered and the macroporous carbon material has cracks and voids formed inside it and the shapability thereof is thereby lowered. For obtaining a uniform macroporous carbon material of good shapability, the speed is preferably from 10 to 100°C/sec.

<6> In the carbonization step of the starting material powder, the pressure to the reaction system is controlled to thereby control the porous structure after the carbonization.

Further, a finding has been obtained that, when the pressure to the reaction system in heating for carbonization is larger, then the thickness of the crosslinks to form the porous material increases more; and therefore in the invention, it is effective to pressurize the reaction system over the atmospheric pressure.

For example, a cedar powder (having a particle size of about 30 $\mu$m and a particle size distribution of from 25 to 32 $\mu$m) is heated at a heating speed of 100°C/sec and kept at 800°C for 1 hour under a varying pressure to the reaction system of from 100 to 300 kPa, and the macroporous carbon material finally obtained is analyzed, whereupon it is confirmed that, when the pressure to the reaction system is larger, then the thickness of the crosslinks is increased from 2 to 10 $\mu$m. The reason may be because, increasing the pressure to the reaction system may be effective for keeping the gas generated through thermal decomposition inside the system, whereby the generated gas may be carbonized and solidified on the surface of the crosslink to thereby increase the thickness of the crosslinks. Accordingly, it has been clarified that, by controlling the pressure to the reaction system in the carbonization step, the amount of the gas generated to remain in the system may be controlled and the thickness of each crosslink constituting the porous material may be thereby controlled, and as a result, the overall structure and the shapability of the porous material can be therefore controlled. In case where the pressure to the reaction system is set over 300 kPa, the uniformity of the crosslinked structure of the macroporous carbon material to be produced may lower and the production cost for pressure application may increase, and therefore, in order to obtain a uniform macroporous carbon material of good shapability according to the method of the invention, the pressure to the reaction system is preferably from 100 to 300 kPa.

For the pressurization, it may be favorably taken into consideration to introduce an inert gas, for example, a nitrogen gas or a rare gas.

<7> By controlling the exhaust resistance of the combustion gas generated inside the reactor, the structure of the macroporous carbon material to be obtained after carbonization is controlled.

By controlling the exhaust resistance of the reactor to be filled with a wood powder, the structure of the macroporous carbon material to be finally obtained after carbonization may be controlled. When the exhaust resistance is increased to increase the sealing level inside the reactor, then, as a result, it may be possible to thicken the crosslinks of the three-dimensional network structure. When the heating speed is set high under an increased sealing level, it may be possible to produce even a macroporous carbon material having a foam structure but not a three-dimensional network structure.

<8> By changing the shape of the mold to be filled with a starting material, the shape of the macroporous carbon material to be obtained after carbonization is controlled to be the shape of the mold.

By changing the shape of the mold to be filled with a starting wood material, the shape of the macroporous carbon material of the invention obtained after carbonization may be controlled to have the form of the mold.

<9> Regarding the macroporous carbon material:

In the invention, a macroporous carbon material having a mean pore diameter of from 1 to 60 $\mu$m, a bulk density of from 0.04 to 0.50 g/cm$^3$ and a porosity of from 75 to 99 % is obtained according to the above-mentioned method. This has a uniform macroporous structure and has a three-dimensional network structure or a three-dimensional foam structure formed therein, and therefore, having a high porosity, this has a high bending strength and a high compression strength. For example, a commercial macroporous carbon material (Tokai Carbon's trade name Porous Carbon PC5060G) has a porosity of 58 % and has a bending strength and a compression strength of from 2.5 to 13.0 MPa. As compared with the commercial macroporous carbon material, the macroporous carbon material of the invention has, at the maximum, a porosity of at least about 1.5 times and a bending strength and a compression strength of at least about 3 times.

Further, the macroporous carbon material of the invention has a low electric conductivity and is excellent in point of electroconductivity. For example, its volume resistivity is within a range of from $1.0 \times 10^{-4}$ to $1.0 \times 10^{-1}$. Preferably, it may be from $1.0 \times 10^{-4}$ to $1.0 \times 10^{-3}$. For reducing the volume resistivity, for example, in producing a macroporous carbon material in the above-mentioned rapid heating method, the starting material is carbonized and then reheated to attain the intended object. Concretely, as in Example 10 given hereinunder, a wood powder is carbonized by heating it up to 800°C at a heating speed of 20°C/sec in an inert gas atmosphere of nitrogen gas or the like, and then, not cooled, this is further heated up to a higher temperature of 1600°C at a heating speed of 20°C/sec. Accordingly, the crystal structure of the macroporous carbon material can be grown further while the three-dimensional network structure thereof is kept as such, and therefore the electroconductivity of the material can be thereby enhanced.

As in the above, the macroporous carbon material of the invention has a macroporous structure and has a three-dimensional network structure or a three-dimensional foam structure formed therein to have a predetermined bending strength and compression strength, and has shapability. The wording "has shapability" as referred to herein means that, as a three-dimensional network structure material or a three-dimensional foam structure material having a macroporous structure and having a predetermined bending strength and compression strength, the macroporous carbon material of the invention may be shaped into blocks of, for example, columnar, tabular or coin-like forms, not using a binder such as resin.

The macroporous carbon material of the invention is expected to have wide-range applications for heat-insulating materials, heat exchangers, filters, ceramic sintering tools, glass shaping tools, various electrodes for fuel cells, special adsorbents, various catalyst carriers, filters for vapor filtration, and others.

<10> Regarding mesoporous carbon material:

In the invention, the macroporous carbon material produced according to the above-mentioned method may be further heated (treated for activation) in air thereby forming, still keeping the macroporous three-dimensional network structure as such, mesopores having a mean pore diameter of from 2 to 50 nm in the surface of the crosslinks constituting the three-dimensional network structure. As a result, the macroporous carbon material of the invention may be a porous carbon material having mesopores falling within the above-mentioned range, in addition to the macropores having a mean pore diameter of from 1 to 60 $\mu$m. The porous carbon material thus treated for activation may have a BET specific surface area reaching from 500 to 1200 m$^2$/g, as measured according to a nitrogen gas adsorption method. Accordingly, not only mesopores are additionally formed by the activation treatment but also the BET specific surface area of the material can be increased to from about 1.5 to 4.0 times that of the material before the activation treatment.

<11> Regarding porous metal material:

The invention makes it possible to produce a porous metal material by the use of the above-mentioned macroporous carbon material. For example, the surface of a macroporous carbon material having a mean pore diameter of from 15 to 45 $\mu$m is coated with a metal, and then this is heated in air to remove the macroporous carbon material. Accordingly, a macroporous metal material having a mean pore diameter of from 10 to 35 $\mu$m can be produced. In consideration of the complicated three-dimensional network structure that the macroporous carbon material has, the metal coating on the surface of the material is, for example, preferably electroplating treatment in which the macroporous carbon material serves as a cathode and a metal material to be applied for plating serves as an anode. The metal material includes, for example, nickel, platinum, palladium, gold, silver, copper, zinc, cadmium, tin, chromium, etc.

As in the above, the invention may readily produce a porous metal material, using the carbon material as a mold.

Examples are shown below for describing the invention in more detail. Needless-to-say, the invention should not be limited by the following Examples.

EXAMPLES

<Example 1>

<Method of controlling the porousness of a macroporous carbon material after production, by controlling the atmospheric pressure>

From a cedar powder, particles having a particle size of about 30 $\mu$m (having a particle size distribution of from 25 to 32 $\mu$m) were sifted. The selected cedar powder was dried at 105°C for 12 hours under atmospheric pressure. After drying, 5 mg of the cedar powder was filled into a stainless cylindrical mold container having a diameter of 5 mm and a height of 7 mm. Next, the container was set in a thermal decomposition unit (PY-2020D, by Frontia Lab.), then the temperature of the furnace for the thermal decomposition unit kept under a pressure of 300 kPa with helium gas kept introduced thereinto was stabilized at 800°C, and the mold container filled with the sample was dropped down and inserted into the furnace of the thermal decomposition unit, and kept heated for 1 hour. Next, the heating was stopped and this was naturally cooled to room temperature. It was previously confirmed that, when the temperature in the thermal decomposition unit is set at 800°C, then the heating speed is 100°C/sec.

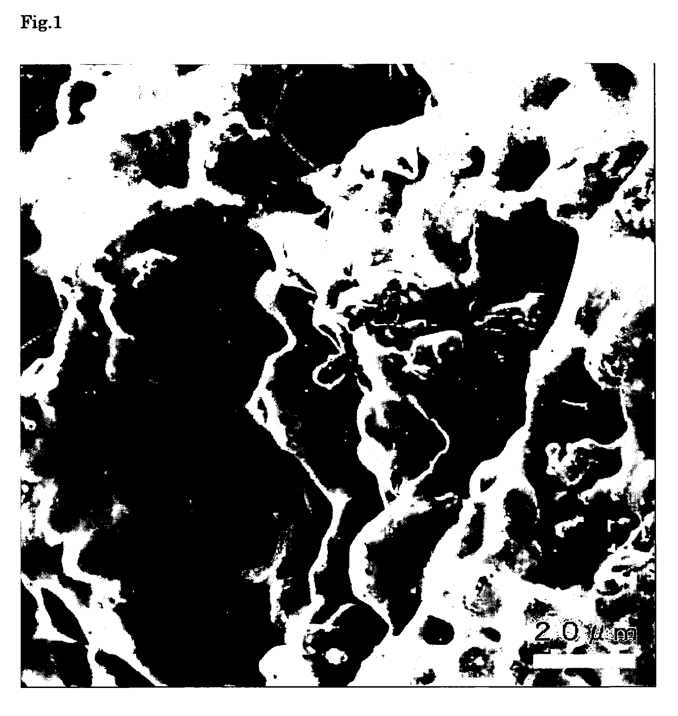

The obtained sample was observed for the porous structure thereof, using a scanning electronic microscope (see Fig. 1). In Fig. 1, many crosslinks having a thickness of 10 $\mu$m or so are seen.

Next, the atmospheric pressure in carbonization was set at 100 kPa, and a sample was carbonized according to the same process as above.

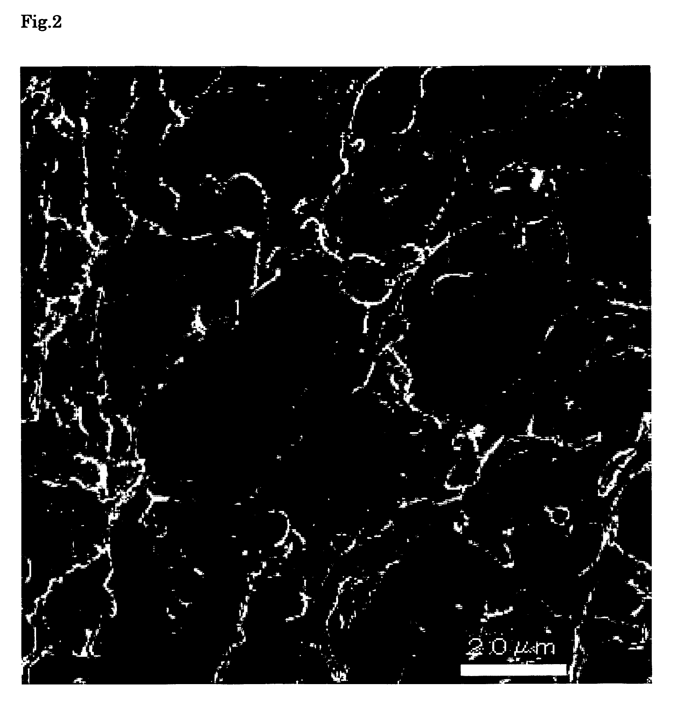

The obtained sample was observed for the porous structure thereof, using a scanning electronic microscope (see Fig. 2). In Fig. 2, many crosslinks of 2 $\mu$m or so are seen.

Comparing the Examples in which the pressure to the reaction system was varied, it became obvious that in the case where the pressure was high, 300 kPa (Fig. 1), a three-dimensional network structured of thicker crosslinks was formed, as compared with the case under atmospheric pressure (100 kPa) (Fig. 2). From these, it was verified that, by controlling the pressure to the reaction system, the thickness of the crosslinks could be controlled, or that is, the three-dimensional network structure after carbonization could be controlled.

<Example 2>

<Method of imparting shapability to macroporous carbon material produced in semi-closed system>

The results in Example 1 show that, according to the rapid heating method, a macroporous carbon material having a three-dimensional network structure was produced. However, the starting material jetted out from the exhaust vent of the sample container, and the shapability was poor. In this Example, tried was producing a macroporous carbon material excellent in shapability and having a three-dimensional network structure by rapid heating in a semi-closed system.

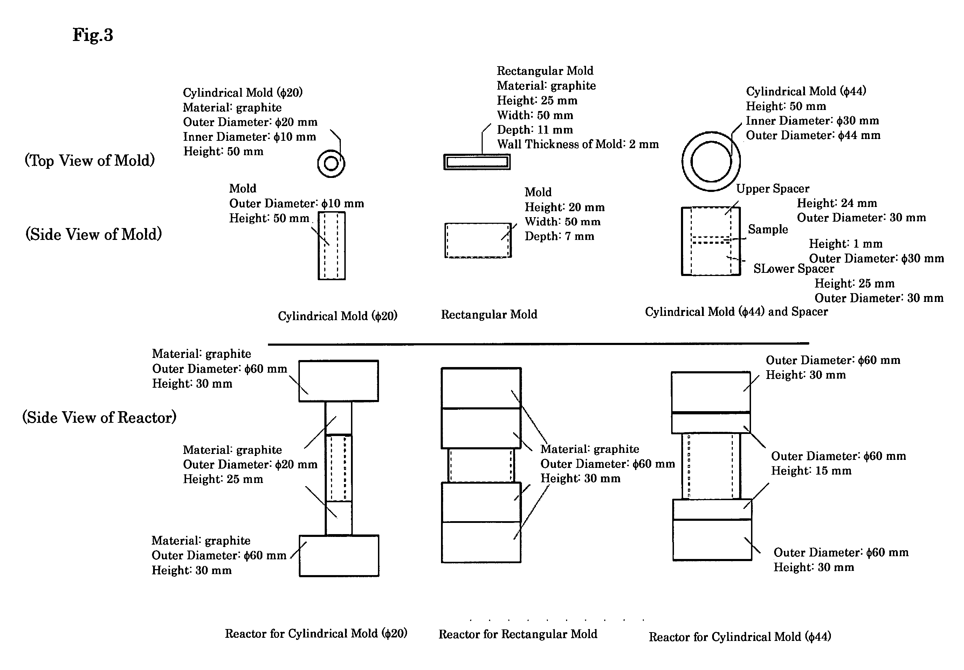

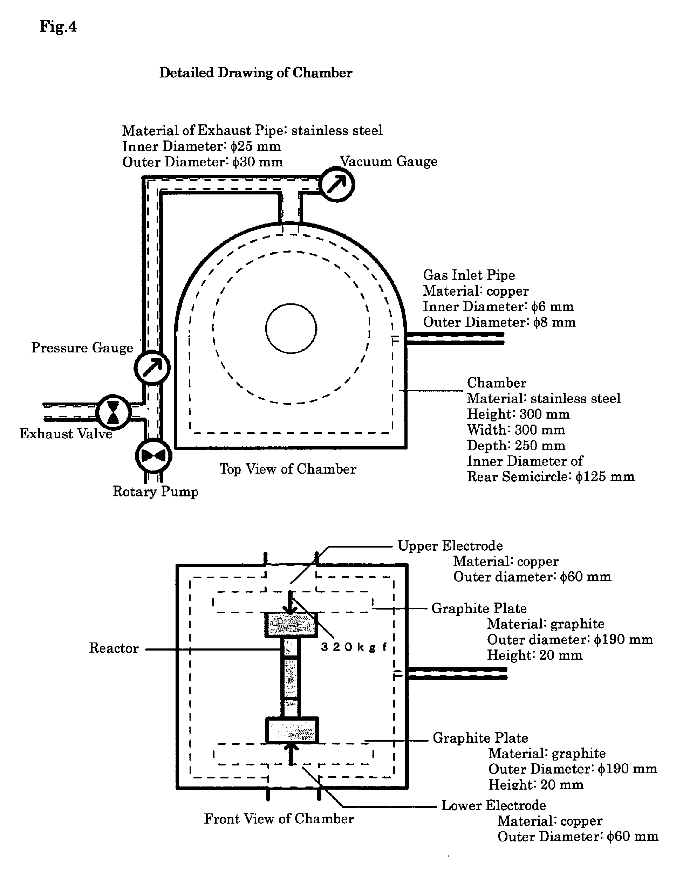

From a cedar powder, particles having a particle size of about 50 $\mu$m (having a particle size distribution of from 32 to 63 $\mu$m) were sifted. The selected cedar powder was dried at 105°C for 12 hours under atmospheric pressure. After drying, 1 g of the cedar powder was filled into a graphite-made cylindrical mold ($\phi$20: inner diameter 1 cm, outer diameter 2 cm, depth 5 cm) and a rectangular mold (thickness 1.1 cm, width 5.0 cm, height 2.5 cm, wall thickness of mold 0.2 cm) at a filling bulk density of 0.25 g/cm$^3$, as in Fig. 3. In each case of the reactor using the mold, the mold-incorporated reactor was set in a chamber (see Fig. 4), and then the pressure inside the chamber was reduced to 40 Pa via a rotary pump. Next, nitrogen gas was introduced, and this was stabilized under atmospheric pressure. Next, the mold was electrified, and heated by the Joule heat from room temperature up to 800°C at a heating speed of 10°C/sec. After reaching 800°C, this was kept at 800°C for 1 hour. After being thus kept, the electrification was stopped, this was naturally cooled to room temperature, and the sample was collected.

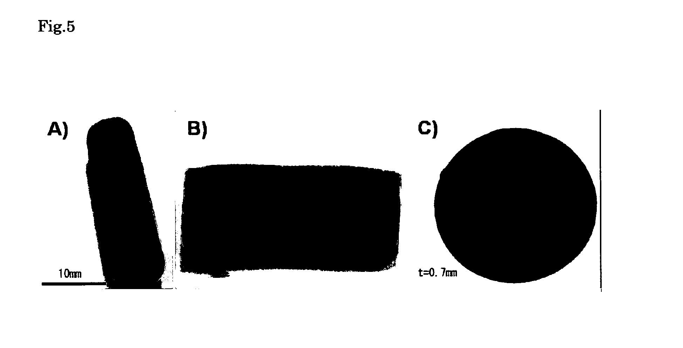

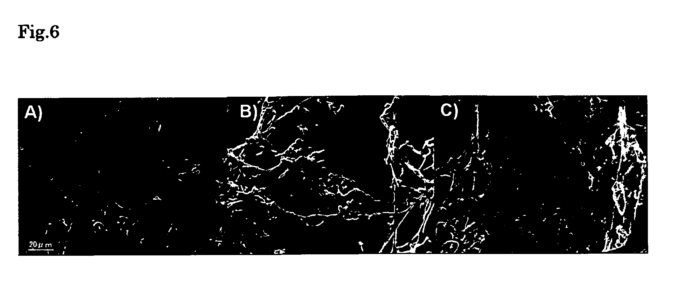

The photographic picture of the obtained samples are shown in Fig. 5A and B. The samples in Fig. 5 were observed with a scanning electronic microscope, which confirmed that the microstructure of the samples was a three-dimensional network structure (Fig. 6A and B). In addition, Fig. 6 shows that the crosslinks constituting the three-dimensional network structure were thinner in the sample obtained by the use of the rectangular mold than in the sample obtained by the use of a cylindrical mold reactor. This is because the rectangular mold has a larger contact area with the reactor than the cylindrical mold and therefore the sealability of the reaction system in the former is lower. The experiments in this Example verified the production of carbon materials shaped in accordance with the mold used.

<Example 3>

<Method of imparting shapability to macroporous carbon material obtained by the use of spacer>

From a cedar powder, particles having a particle size of about 50 $\mu$m (having a particle size distribution of from 32 to 63 $\mu$m) were sifted. The selected cedar powder was dried at 105°C for 12 hours under atmospheric pressure. Next, as in Fig. 3, a lower graphite-made spacer (outer diameter 3 cm, height 2.5 cm) was inserted into the bottom of a graphite-made cylindrical mold ($\phi$44: inner diameter 3 cm, outer diameter 4.4 cm, depth 5 cm); and 0.2 g of the dried cedar powder was filled into it from the top. After being thus filled, an upper graphite-made spacer (outer diameter 3 cm, height 2.4 cm) was fitted into the top. The mold and the reactor were set in the chamber shown in Fig. 4, and the chamber was degassed to a reduced pressure of 40 Pa via a rotary pump. Next, this was stabilized under atmospheric pressure with nitrogen gas introduced thereinto. Next, the cylindrical mold was electrified, and heated by the Joule heat from room temperature up to 800°C at a heating speed of 10°C/sec. After reaching 800°C, this was kept at 800°C for 1 hour. After being thus kept, the electrification was stopped, this was naturally cooled to room temperature, and the sample was collected.

The photographic picture of the obtained sample having a diameter of 2.4 cm and a thickness of 0.7 mm is shown in Fig. 5C. The samples in Fig. 6C is observed with a scanning electronic microscope, which confirmed that the microstructure of the microporous carbon material was a three-dimensional network structure (Fig. 6C). In addition, Fig. 6 shows that the crosslinks constituting the three-dimensional network structure were thinner in the sample obtained in this Example than in the case of using any other reactor. This is because the mold used in this Example has a larger contact area with the reactor than in the other mold, and therefore the sealability of the reaction system in the former is lower, and in addition, since the spacers were installed in the former, the heat capacity of the reactor increased and the heating speed in heating the sample was lowered. This Example verified that, by installing a spacer in a mold, macroporous carbon materials having a differently-controlled thickness can be produced in one mold.

<Example 4>

<Control of porousness of macroporous carbon material based on the heating speed in heating for carbonization as parameter>

(Case where the heating speed is 100°C/sec)

From a cedar powder, particles having a particle size of about 50 $\mu$m (having a particle size distribution of from 32 to 63 $\mu$m) were sifted. The selected cedar powder was dried at 105°C for 12 hours under atmospheric pressure. After drying, 1 g of the cedar powder was filled into a graphite-made cylindrical mold ($\phi$20) at a filling bulk density of 0.25 g/cm$^3$, as in Fig. 3. The reactor with the cylindrical mold filled with the cedar powder incorporated thereinto was installed in a chamber (see Fig. 4), and then the chamber was degassed from atmospheric pressure to a reduced pressure of 40 Pa via a rotary pump. Next, this was stabilized under atmospheric pressure with nitrogen gas introduced thereinto. Next, the cylindrical mold was electrified, and heated by the Joule heat from room temperature up to 800°C at a heating speed of 100°C/sec. After reaching 800°C, this was kept at 800°C for 1 hour. After being thus kept, the electrification was stopped, this was naturally cooled to room temperature, and the columnar shaped sample was collected.

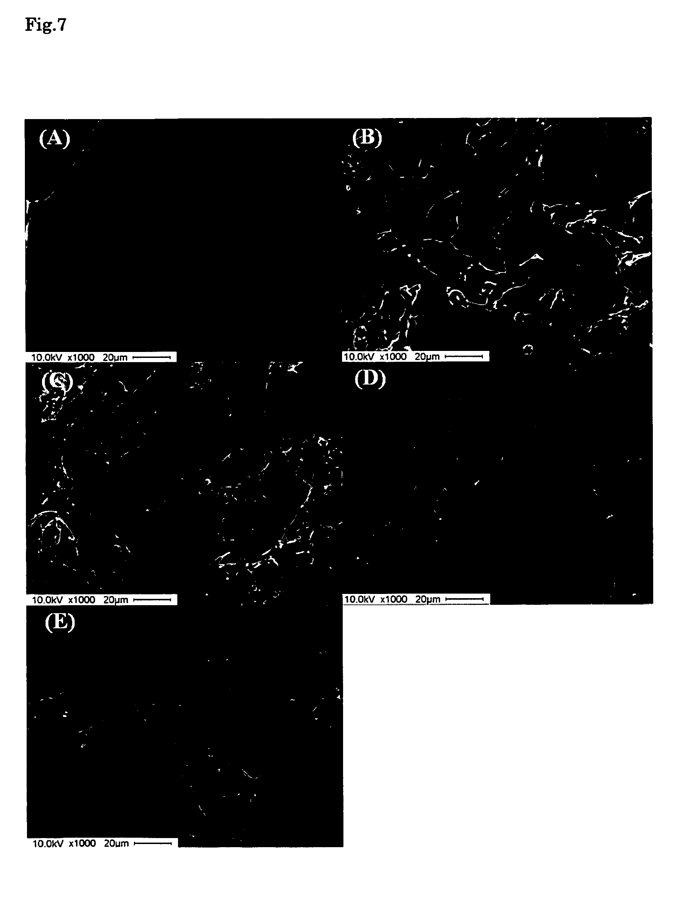

After being collected, the sample was observed with a scanning electronic microscope, and the pore size distribution was determined according to a mercury intrusion method, and the bulk density and the true density were determined. The scanning electromicroscopic photograph is shown in Fig. 7A. Fig. 7A confirms that the microstructure of the obtained sample is a three-dimensional foam structure. This quite differs from the microstructure of the starting material, cedar powder shown in Fig. 7E, and it has become obvious that the microstructure of the starting powder changed in the rapid heating method. Next, the analytical data of the pore size distribution according to a mercury intrusion method and the bulk density confirmed that the mean pore diameter of the sample was 26.5 $\mu$m and the bulk density thereof was 0.06 g/cm$^3$. The true density was 1.92 g/cm$^3$. From the found data, the porosity of the sample was computed according to the following computational formula:

$$\textbf{Porosity (\%) = [1 - (bulk density)/(true density)]}$$

As a result, the porosity of the sample was 97.1 %.

(Case where the heating speed is 10°C/sec)

A sample was produced according to the same process as in Example 4, for which, however, the heating speed in carbonization was set at 10°C/sec. The carbonized sample was observed with a scanning electronic microscope, and the pore size distribution was determined according to a mercury intrusion method, and the bulk density and the true density were determined. The electromicroscopic photograph of the sample is shown in Fig. 7B. Fig. 7B confirms that the microstructure of the obtained sample is a three-dimensional network structure and has a large number of crosslinks having a size of 10 $\mu$m or so. Also in the case where the heating speed is 10°C/sec, the microstructure of the obtained sample quite differs from that of the starting material, cedar powder shown in Fig. 7E, and it has become obvious that the microstructure of the starting powder changed in the rapid heating method. Next, the analytical data of the pore size distribution according to a mercury intrusion method and the bulk density confirmed that the mean pore diameter of the sample was 43.86 $\mu$m and the bulk density thereof was 0.09 g/cm$^3$. The true density was 1.88 g/cm$^3$. From the found data, the porosity of the sample was 95.1 %.

(Case where the heating speed is 1°C/sec)

A sample was produced according to the same process as in Example 4, for which, however, the heating speed in carbonization was set at 1°C/sec. The carbonized sample was observed with a scanning electronic microscope, and the pore size distribution was determined according to a mercury intrusion method, and the bulk density and the true density were determined. The electromicroscopic photograph of the sample is shown in Fig. 7C. Fig. 7C confirms that the microstructure of the obtained sample is a three-dimensional network structure and has a large number of crosslinks having a size of 1 $\mu$m or so. Next, the analytical data of the pore size distribution according to a mercury intrusion method and the bulk density confirmed that the mean pore diameter of the sample was 17.7 $\mu$m and the bulk density thereof was 0.20 g/cm$^3$. The true density was 1.85 g/cm$^3$. From the found data, the porosity of the sample was 89.4 %.

(Case where the heating speed is 0.1°C/sec)

A comparative sample was produced according to the same process as in Example 4, for which, however, the heating speed in carbonization was set at 0.1°C/sec. The carbonized sample was observed with a scanning electronic microscope, and the pore size distribution was determined according to a mercury intrusion method, and the bulk density and the true density were determined. The electromicroscopic photograph of the sample is shown in Fig. 7D. Fig. 7D confirms that the microstructure of the obtained sample completely kept the morphology of the starting wood powder before carbonization as such, but only a contracted aggregation was observed therein (a three-dimensional network structure or a three-dimensional foam structure was not formed). Next, the analytical data of the pore size distribution according to a mercury intrusion method and the bulk density confirmed that the mean pore diameter of the sample was 14.3 $\mu$m and the bulk density thereof was 0.22 g/cm$^3$. The true density was 1.84 g/cm$^3$. From the found data, the porosity of the sample was 88.3 %.

The experimental results with the heating speed in carbonization as the parameter clarified the following:

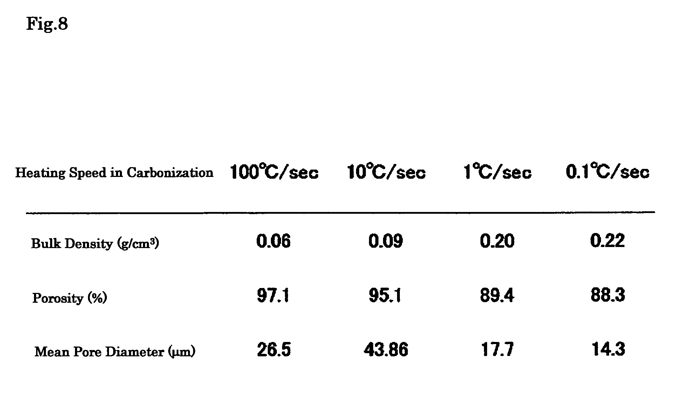

(1) The microscopic pictures of the samples confirmed that the microstructure of each sample differs depending on the heating speed in carbonization. In addition, it was confirmed that, when the heating speed in carbonization is lower, the microstructure of the sample after carbonization is more similar to that of the starting cedar powder.
(2) The found data of the bulk density, the porosity and the mean pore diameter of the samples are shown in Fig. 8. From Fig. 8, it is known that, when the heating speed in carbonization is higher, a carbon material having a lower density and a higher porosity can be produced. The mean pore diameter is larger when the heating speed in carbonization is higher. The microstructure of the macroporous carbon material produced at a heating speed of 100°C/sec is a three-dimensional foam structure, and therefore, the pores were blocked by the existence of the carbon thin film, as seen in Fig. 7A, and the mean pore diameter as measured according to a mercury intrusion method was low.

The above results confirm that, by controlling the heating speed in carbonization, the macroporous carbon material may be made to have a three-dimensional network structure or a three-dimensional foam structure. Further, it is also confirmed that the mean pore diameter, the bulk density and the porosity of the material can also be controlled.

<Example 5>

<Method of controlling the bulk density of produced macroporous carbon material based on the filling bulk density of starting material as parameter>

From a cedar powder, particles having a particle size of about 50 $\mu$m (having a particle size distribution of from 32 to 63 $\mu$m) were sifted. The selected cedar powder was dried at 105°C for 12 hours under atmospheric pressure. Next, the dried cedar powder was filled into the graphite-made cylindrical mold ($\phi$44) with spacer, shown in Fig. 3. In this stage, the filling bulk density was changed in three ranks of 0.25, 0.50 and 0.75 g/cm$^3$. Next, the mold filled with the cedar powder and the reactor were installed in a chamber as in Fig. 4, and the chamber was degassed to a reduced pressure of 40 Pa via a rotary pump. Next, the chamber was stabilized under atmospheric pressure with nitrogen gas introduced thereinto. Next, the cylindrical mold was electrified, and heated by the Joule heat from room temperature up to 800°C at a heating speed of 50°C/sec. After reaching 800°C, this was kept at 800°C for 1 hour. After being thus kept, the electrification was stopped, this was naturally cooled to room temperature, and the coin-like shaped sample was collected.

After being collected, the bulk density of the sample was measured according to a mercury intrusion method. As a result, it has become obvious that, when the filling bulk density of the starting cedar powder is larger, then the bulk density of the obtained macroporous carbon material is larger. For example, when a cedar powder was processed at a filling bulk density of 0.25 g/cm$^3$, then a macroporous carbon material having a bulk density of 0.12 g/cm$^3$ was produced. Similarly, at a filling bulk density of 0.50 g/cm$^3$, a macroporous carbon material having a bulk density of 0.22 g/cm$^3$ was produced. Further, at an increased filling bulk density of 0.75 g/cm$^3$, a macroporous carbon material having a bulk density of 0.37 g/cm$^3$ was produced. Accordingly, by increasing the filling bulk density of the starting material, the bulk density of the macroporous carbon material to be obtained finally can be increased.

<Example 6>

<Method of controlling the bending strength of produced macroporous carbon material based on the filling bulk density of starting material as parameter>

From a cedar powder, particles having a particle size of about 50 $\mu$m (having a particle size distribution of from 32 to 63 $\mu$m) were sifted. The selected cedar powder was dried at 105°C for 12 hours under atmospheric pressure. Next, the dried cedar powder was filled into the graphite-made cylindrical mold ($\phi$44) with spacer, shown in Fig. 3. In this stage, the filling bulk density was changed in three ranks of 0.25, 0.50 and 0.75 g/cm$^3$. Next, the mold filled with the cedar powder and a reactor were installed in a chamber as in Fig. 4, and the chamber was degassed to a reduced pressure of 40 Pa via a rotary pump. Next, the chamber was stabilized under atmospheric pressure with nitrogen gas introduced thereinto. Next, the cylindrical mold was electrified, and heated by the Joule heat from room temperature up to 800°C at a heating speed of 50°C/sec. After reaching 800°C, this was kept at 800°C for 1 hour. After being thus kept, the electrification was stopped, this was naturally cooled to room temperature, and the coin-like shaped sample was collected.

Test pieces having a length of 25 mm and a width of 4 mm were cut out of the thus-collected, coin-like shaped sample. The thickness of each test piece was measured. Using a universal strength tester (Instron), each test piece was tested for the bending strength according to a three-point bending test under the condition of a span of 20 mm and a loading rate of 0.5 mm/min. As a result, it was clarified that, when the filling bulk density in filling the starting cedar powder into the mold is higher, then the bending strength of the carbon material obtained finally is higher. For example, in the case where the cedar powder was filled at a filling bulk density of 0.25 g/cm$^3$, the macroporous carbon material produced had a bending strength of 0.49 MPa. In the case where the same cedar powder was filled at a filling bulk density of 0.50 g/cm$^3$, the macroporous carbon material produced had a bending strength of 5.78 MPa. Further, in the case where the cedar powder was filled at a filling bulk density of 0.75 g/cm$^3$, the macroporous carbon material produced had a bending strength of 15.11 MPa. Accordingly, by increasing the filling bulk density of the starting material, the bending strength of the macroporous carbon material to be obtained finally was increased.

<Example 7>

<Example of producing macroporous carbon material from other wood powder than cedar>

A poplar was selected as a typical wood species of a broadleaf tree. From a poplar powder, particles having a particle size of 50 $\mu$m were sifted. The selected poplar powder was dried at 105°C for 12 hours under atmospheric pressure. After drying, 1 g of the poplar powder was filled into a graphite-made cylindrical mold ($\phi$20: inner diameter 1 cm, outer diameter 2 cm, depth 5 cm) at a filling bulk density of 0.25 g/cm$^3$, as in Fig. 3. The reactor with the cylindrical mold incorporated thereinto was installed in a chamber (see Fig. 4), and then the chamber was degassed to a reduced pressure of 40 Pa via a rotary pump. Next, this was stabilized under atmospheric pressure with nitrogen gas introduced thereinto. Next, the cylindrical mold was electrified, and heated by the Joule heat from room temperature up to 800°C at a heating speed of 10°C/sec. After reaching 800°C, this was kept at 800°C for 10 minutes. After being thus kept, the electrification was stopped, this was naturally cooled to room temperature, and the carbonized sample was collected.

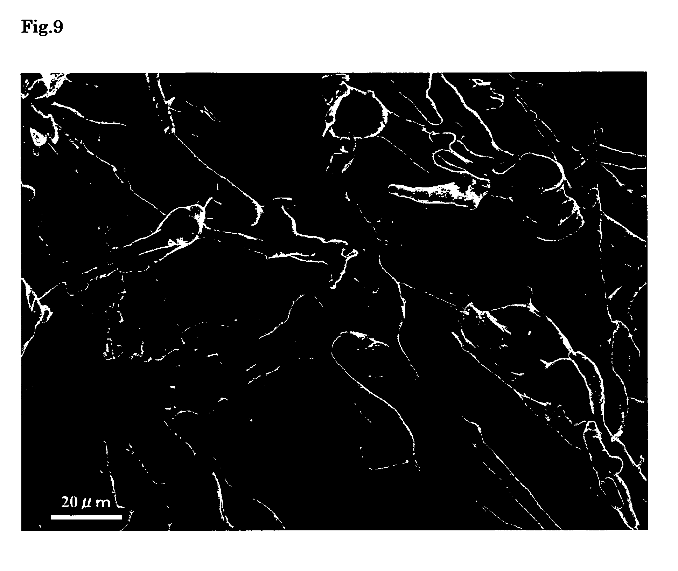

A scanning electromicroscopic photograph of the thus-collected, columnar shaped sample is shown in Fig. 9. Fig. 9 confirms that the poplar powder also gave a macroporous carbon material having a three-dimensional network structure, like in the case of starting from a cedar powder, a typical wood species of a coniferous tree.

<Example 8>

<Example of producing macroporous carbon material from wood residue prepared by extracting and removing the preservative component from waste wood>

A waste wood material was powdered and dipped in diluted sulfuric acid having a concentration of 0.5 mol/L, whereby the preservative components, copper, arsenic and chromium were completely removed to give a western hemlock powder, and this was used as a starting material. Western hemlock is a type of preservative-processed wood for construction materials, and there are large quantities of its wastes all over the world. The preservative-removed, western hemlock powder was dried at 105°C for 12 hours under atmospheric pressure. After drying, 1 g of the western hemlock powder was filled into a graphite-made cylindrical mold ($\phi$20) at a filling bulk density of 0.25 g/cm$^3$, as in Fig. 3. The reactor with the cylindrical mold incorporated thereinto was installed in a chamber (see Fig. 4), and then the chamber was degassed to a reduced pressure of 40 Pa via a rotary pump. Next, this was stabilized under atmospheric pressure with nitrogen gas introduced thereinto. Next, the cylindrical mold was electrified, and heated by the Joule heat from room temperature up to 800°C at a heating speed of 10°C/sec. After reaching 800°C, this was kept at 800°C for 10 minutes. After being thus kept, the electrification was stopped, this was naturally cooled to room temperature, and the carbonized sample was collected.

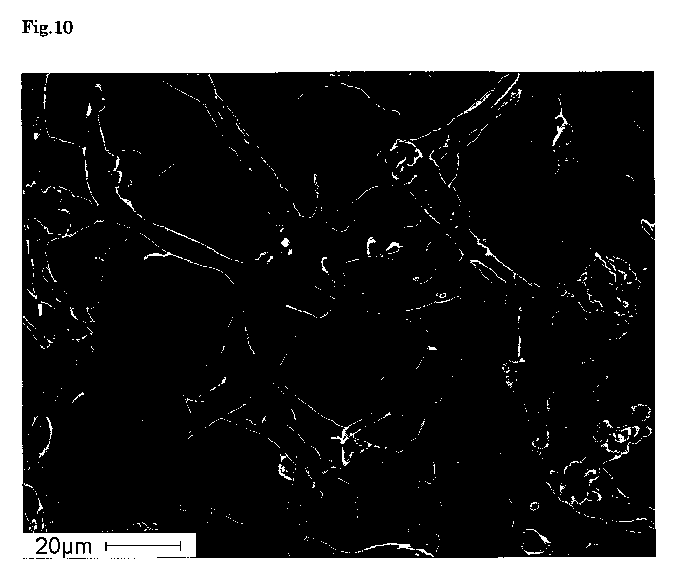

A scanning electromicroscopic photograph of the thus-collected, columnar shaped sample is shown in Fig. 10. Fig. 10 confirms that the microstructure of the macroporous carbon material produced from the western hemlock powder, from which the preservative had been removed by extraction, is a porous structure. The experiments of this Example verify that a carbon material having a three-dimensional network structure can be obtained from a wood powder from which the preservative had been removed by extraction.

<Example 9>

<Example of producing macroporous carbon material by the use of reagents of lignin and cellulose that are main ingredients of wood material>

A lignin powder (Tokyo Chemical Industry's alkali-removed lignin) and a cellulose powder (Asahi Kasei's Avicel PH101) each were dried at 105°C for 12 hours under atmospheric pressure. After drying, the lignin and the cellulose were mixed in a ratio of 1/1, near to the weight ratio of lignin/cellulose in main wood, and this was used as a starting material. After drying, 2 g of the starting material was filled into a graphite-made cylindrical mold ($\phi$20) at a filling bulk density of 0.51 g/cm$^3$, as in Fig. 3. The cylindrical mold filled with the material powder and a reactor were installed in a chamber (see Fig. 4), and then the chamber was degassed to a reduced pressure of 40 Pa via a rotary pump. Next, this was stabilized under atmospheric pressure with nitrogen gas introduced thereinto. Next, the cylindrical mold was electrified, and heated by the Joule heat from room temperature up to 800°C at a heating speed of 10°C/sec. After reaching 800°C, this was kept at 800°C for 10 minutes. After being thus kept, the electrification was stopped, this was naturally cooled to room temperature, and the carbonized sample was collected.

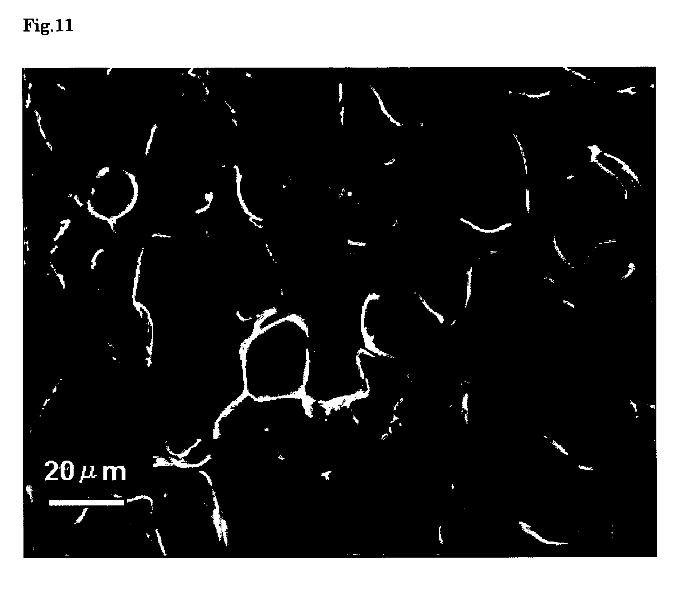

A scanning electromicroscopic photograph of the thus-collected, columnar shaped sample is shown in Fig. 11. Fig. 11 confirms that a macroporous carbon material having a porous microstructure can be obtained from reagents.

<Example 10>

<Example of showing compression strength of macroporous carbon material produced by rapid heating method>

(Case where the heating speed is 100°C/sec)

From a cedar powder, particles having a particle size of about 50 $\mu$m (having a particle size distribution of from 32 to 63 $\mu$m) were sifted. The selected cedar powder was dried at 105°C for 12 hours under atmospheric pressure. After drying, 1 g of the cedar powder was filled into a graphite-made cylindrical mold ($\phi$20) at a filling bulk density of 0.25

$g/cm^3$, as in Fig. 3. The reactor with the cylindrical mold filled with the cedar powder incorporated thereinto was installed in a chamber (see Fig. 4), and then the chamber was degassed from atmospheric pressure to a reduced pressure of 40 Pa via a rotary pump. Next, this was stabilized under atmospheric pressure with nitrogen gas introduced thereinto. Next, the cylindrical mold was electrified, and heated by the Joule heat from room temperature up to 800°C at a heating speed of 100°C/sec. After reaching 800°C, this was kept at 800°C for 1 hour. After being thus kept, the electrification was stopped, this was naturally cooled to room temperature, and the carbonized sample was collected.

Using a universal strength tester, the thus-collected, columnar shaped sample was tested for the compression strength. The compression strength of the sample was 0.490 MPa.

(Case where the heating speed is 10°C/sec)

A carbonized sample was produced according to the same process as in the above where the heating speed was 100°C/sec, for which, however, the heating speed in carbonization was set at 10°C/sec. Using a universal strength tester, the collected columnar shaped sample was tested for the compression strength. The compression strength of the sample was 0.308 MPa.

(Case where the heating speed is 1°C/sec)

A carbonized sample was produced according to the same process as in the above where the heating speed was 100°C/sec, for which, however, the heating speed in carbonization was set at 1°C/sec. Using a universal strength tester, the collected columnar shaped sample was tested for the compression strength. The compression strength of the sample was 0.052 MPa.

(Case where the heating speed is 0.1°C/sec)

A comparative sample was produced according to the same process as in the above where the heating speed was 100°C/sec, for which, however, the heating speed in carbonization was set at 0.1°C/sec. Using a universal strength tester, the collected columnar shaped sample was tested for the compression strength. However, under compression, the sample was thickened and its accurate compression strength could not be measured.

The above-mentioned experimental results based on the heating speed in carbonization as a parameter confirm that the samples carbonized at a higher heating speed could have a higher compression strength.

<Example 11>

<Method of enhancing electroconductivity of macroporous carbon of the invention>

In this Example, a macroporous carbon material produced according to a rapid heating method is again heated at a high temperature in a nitrogen gas atmosphere to thereby increase the electroconductivity of the material. Concretely, by the reheating, a graphite phase having a high electric conductivity is grown in the crystal of the macroporous carbon material, thereby reducing the electric resistance of the material and increasing the electroconductivity thereof.

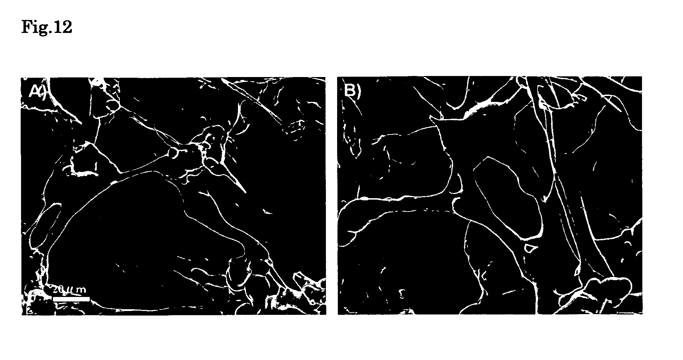

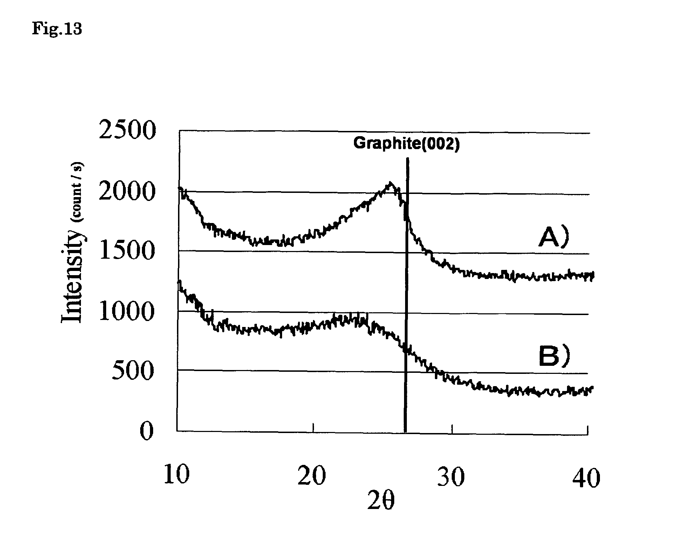

From a cedar powder, particles having a particle size of about 50 $\mu$m (having a particle size distribution of from 32 to 63 $\mu$m) were sifted. The selected cedar powder was dried at 105°C for 12 hours under atmospheric pressure. After drying, 1 g of the cedar powder was filled into a graphite-made cylindrical mold ($\phi$20) at a filling bulk density of 0.25 $g/cm^3$, as in Fig. 3. The reactor with the cylindrical mold filled with the cedar powder incorporated thereinto was installed in a chamber (see Fig. 4), and then the chamber was degassed from atmospheric pressure to a reduced pressure of 40 Pa via a rotary pump. Next, this was stabilized under atmospheric pressure with nitrogen gas introduced thereinto. Next, the cylindrical mold was electrified, and heated by the Joule heat from room temperature up to 800°C at a heating speed of 20°C/sec. After reaching 800°C, this was kept at 800°C for 1 hour. After being thus kept, this was further heated from 800°C up to 1600°C at a heating speed of 20°C/min. After reaching 1600°C, this was kept at 1600°C for 10 minutes. After being thus kept, the electrification was stopped, this was naturally cooled to room temperature, and the carbonized and reheated sample was collected. The microstructure of the thus-collected, columnar shaped sample was observed with a scanning electronic microscope, and the crystal structure thereof was analyzed according to a powder X-ray diffractiometric method. Further, according to a 4-probe resistivity measuring method, the volume resistivity of the sample was measured. The scanning electromicroscopic photograph of the sample is shown in Fig. 12A. Fig. 12A confirms that the microstructure of the sample is a three-dimensional network structure. As a result of the crystal structure analysis according to the powdery X-ray diffractiometric method (see Fig. 13A), a peak was detected at a diffraction angle $2\theta = 25°$. From the result of the electric resistance measurement according to the 4-probe resistivity measuring method, it was confirmed that the volume resistivity of the sample was $2.9 \times 10^{-3}$ $\Omega$·cm.

(Reference Example)

In this Reference Example, a starting material was carbonized according to the same process as in Example 10. In this, however, the sample was not reheated, and the electrification was stopped. After being naturally cooled to room temperature, the carbonized sample was collected.

The microstructure of the thus-collected sample was observed with a scanning electronic microscope, and the crystal structure thereof was analyzed according to a powder X-ray diffractiometric method. Further, according to a 4-probe resistivity measuring method, the volume resistivity of the sample heated up to 800°C was measured.

The scanning electromicroscopic photograph of the sample is shown in Fig. 12B. Fig. 12B confirms that the microstructure of the sample is a three-dimensional network structure. As a result of the crystal structure analysis according to the powdery X-ray diffractiometric method (see Fig. 13B), a peak was detected at a diffraction angle $2\theta = 23°$. From the result of the electric resistance measurement according to the 4-probe resistivity measuring method, it was confirmed that the volume resistivity of the sample was $1.3 \times 10^{-2}$ $\Omega \cdot$cm.

The above experimental results clarified the following:

1) From the result of microstructure observation, it was confirmed that the reheated sample has the same three-dimensional network structure as that of the non-reheated sample, or that is, the reheated sample kept the three-dimensional network structure therefore before reheating.

2) From the crystal structure analysis according to the powdery X-ray diffractiometric method, it is known that the reheated sample had a peak nearer to the graphite (002) peak (spacing $d_{002} = 0.3544$ nm) (see Fig. 13) as compared with the non-reheated sample. This confirms that the crystal structure of the macroporous carbon material of this Example was grown further by the reheating treatment.

3) From the result of the volume resistivity measurement, it is known that the volume resistivity of the reheated sample was lowered to about 1/5 of that of the non-reheated sample; and this indicates that the reheating treatment may enhance the electroconductivity of the treated sample.

These verify that, when the macroporous carbon material produced according to a rapid heating method is reheated at a high temperature, then the crystal structure of the material may be grown further while the three-dimensional network structure thereof is kept as such, and the electroconductivity of the material may be thereby enhanced.

<Example 12>

<Method of increasing the specific surface area of macroporous carbon material, simultaneously forming mesopores therein>

In this Example, the macroporous carbon material produced according to a rapid heating method is reheated in air to thereby increase the specific surface area thereof. Also described is a method of forming mesopores (pores having a mean pore diameter of from 2 to 50 nm and characteristic of a mesoporous material), which do not almost exist in ordinary charcoal, in the macroporous carbon material. Concretely, the macroporous carbon material was reheated in air to thereby increase the specific surface area thereof and to form mesopores therein.

From a cedar powder, particles having a particle size of about 50 $\mu$m (having a particle size distribution of from 32 to 63 $\mu$m) were sifted. The selected cedar powder was dried at 105°C for 12 hours under atmospheric pressure. Next, the dried cedar powder was filled into the graphite-made cylindrical mold ($\phi$44) with spacer shown in Fig. 3, at a filling bulk density of 0.25 g/cm$^3$. Next, the mold filled with the cedar powder and a reactor were installed in a chamber as in Fig. 4, and the chamber was degassed to a reduced pressure of 40 Pa via a rotary pump. Next, the chamber was stabilized under atmospheric pressure with nitrogen gas introduced thereinto. Next, the cylindrical mold was electrified, and heated by the Joule heat from room temperature up to 800°C at a heating speed of 50°C/sec. After reaching 800°C, this was kept at 800°C for 1 hour. After being thus kept, the electrification was stopped, this was naturally cooled to room temperature, and the coin-like shaped sample was collected. After being collected, the sample was transferred into an oven, and heated at 380°C in air for 1 hour.

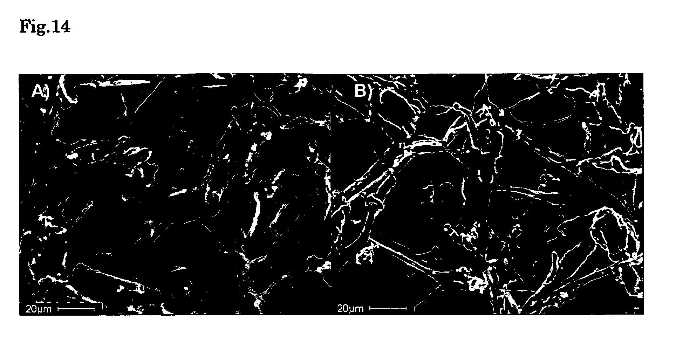

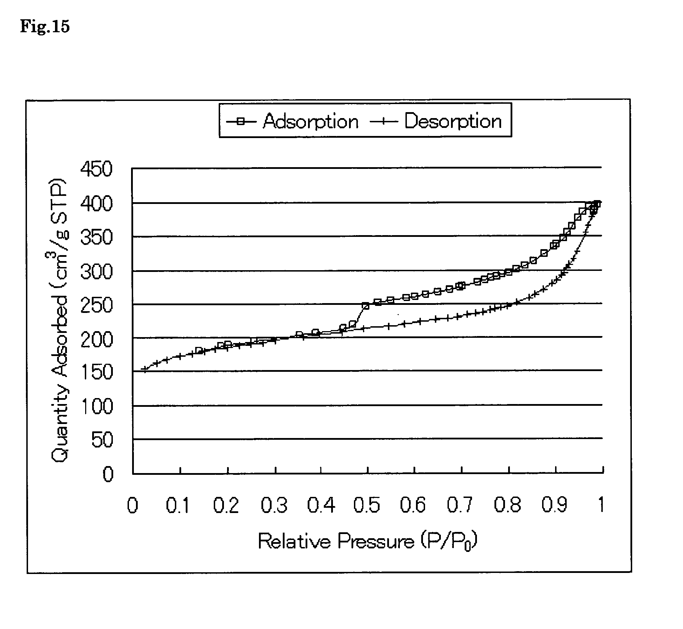

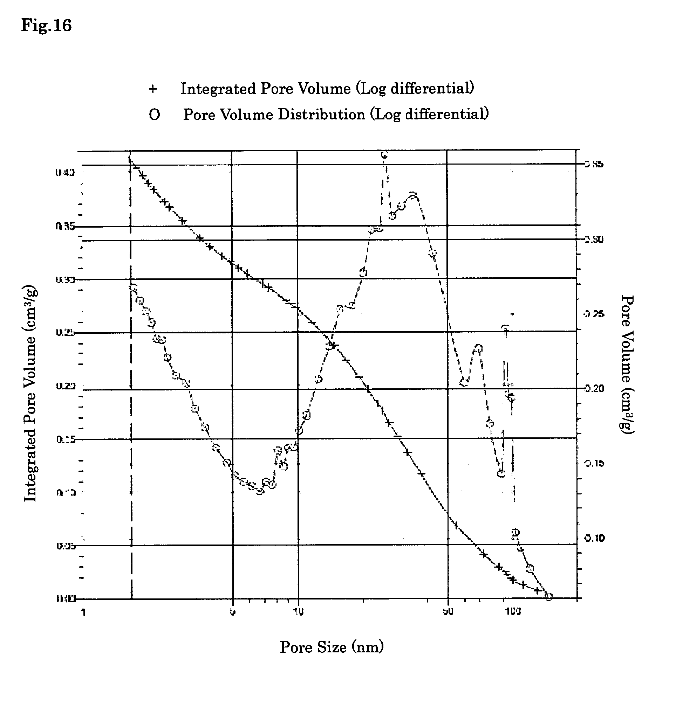

The reheated sample was observed with a scanning electronic microscope, and the pore diameter distribution and the specific surface area thereof were determined according to a mercury intrusion method and a nitrogen gas adsorption method. The scanning electromicroscopic photograph is shown in Fig. 14A. For control, the scanning electromicroscopic photograph of the non-reheated sample is shown in Fig. 14B. Figs. 14A and B confirm that the microstructure of the reheated sample is a three-dimensional network structure like that of the non-reheated sample. The sorption isotherm according to the nitrogen gas adsorption method is shown in Fig. 15; and the analytical result of the pore volume distribution (Log differential) according to a BJH method is in Fig. 16. In Fig. 16, the mark "+" indicates the integrated pore volume (Log differential); and "O" indicates the pore volume distribution (Log differential).

The results show that mesopores having a pore diameter of from 25 to 50 nm, which did not exist before the reheating treatment, remarkably increased as a result of the reheating in this Example. On the other hand, the non-reheated sample had few mesopores. Accordingly, it is known that mesopores were newly formed by the reheating treatment.

The BET relative surface area of the reheated sample was 677.74 $m^2$/g. On the other hand, the BET relative surface area of the non-reheated sample was 372.10 $m^2$/g. Taking this into consideration, it is known that the relative surface area of the sample increased by 1.82 times as a result of the reheating treatment.

<Example 13>

<Method for producing porous nickel, using the macroporous carbon material of the invention as mold>

Many metals such as typically nickel are applicable to electroplating. Accordingly, in the fields of batteries, filters, heat-insulating materials and others, production of porous metals by electroplating by the use of a porous material serving as a mold is carried out flourishingly.

In this Example, porous nickel was produced, using the macroporous carbon material produced according to a rapid heating method, as a mold. Concretely, the macroporous carbon material produced according to a rapid heating method is plated with nickel, and after the plating, the macroporous carbon material serving as a mold is burnt away and removed thereby producing porous nickel.

From a cedar powder, particles having a particle size of about 50 $\mu$m (having a particle size distribution of from 32 to 63 $\mu$m) were sifted. The selected cedar powder was dried at 105°C for 12 hours under atmospheric pressure. Next, the dried cedar powder was filled into the graphite-made cylindrical mold ($\phi$44) with spacer shown in Fig. 3, at a filling bulk density of 0.25 g/$cm^3$. Next, the mold filled with the cedar powder and a reactor were installed in a chamber as in Fig. 4, and the chamber was degassed to a reduced pressure of 40 Pa via a rotary pump. Next, the chamber was stabilized under atmospheric pressure with nitrogen gas introduced thereinto. Next, the cylindrical mold was electrified, and heated by the Joule heat from room temperature up to 800°C at a heating speed of 50°C/sec. After reaching 800°C, this was kept at 800°C for 1 hour. After being thus kept, the electrification was stopped, this was naturally cooled to room temperature, and the coin-like shaped sample was collected. After being collected, the obtained macroporous carbon was dipped in ethanol for reduced-pressure intrusion for 10 minutes. After ethanol was thus infiltrated thereinto, the macroporous carbon was connected to the negative electrode of a constant current power and an Ni plate was to the positive electrode. Next, the negative electrode and the positive electrode were sunk in 500 mL of a Watt bath ($NiSO_4 \cdot 6H_2O$: 240 g/L, $NiCl_2 \cdot 6H_2O$: 120 g/L, $HBO_3$: 30 g/L), and fixed therein as kept in no contact between the two. After being thus fixed, the system was electrified at 1.0 A for 10 minutes. After the nickel plating, the obtained sample was washed with distilled water, and for removing the mold, macroporous carbon material, this was heated in air at 450°C for 1 hour using an electric furnace.

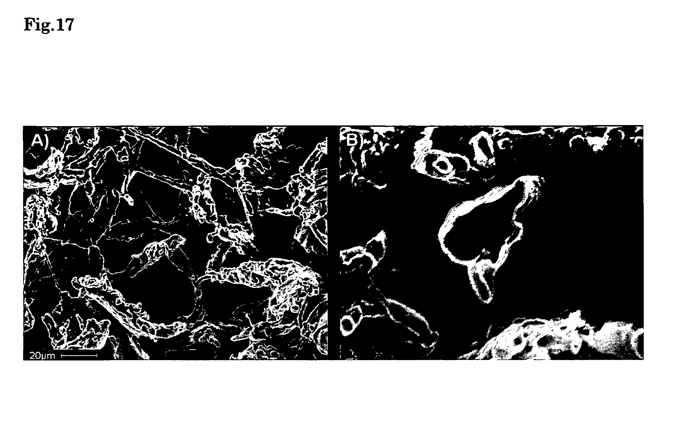

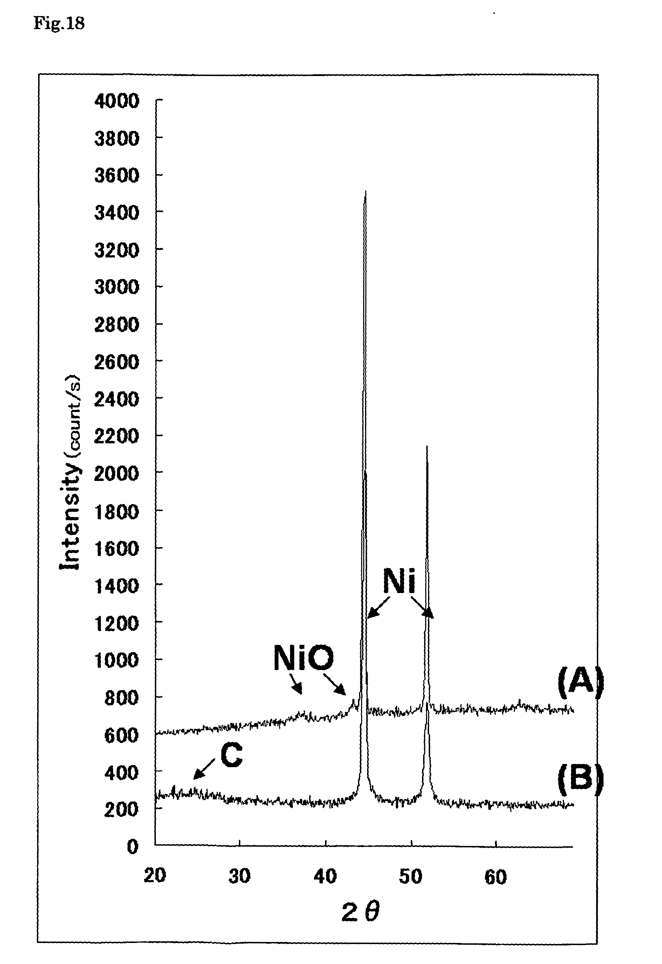

The surface and the cross section of the sample thus heated in air were observed with a scanning electronic microscope. The scanning electromicroscopic photograph of the surface is shown in Fig. 17A; and that of the cross section is in Fig. 17B. Fig. 17A confirms that the microstructure of the obtained sample has a three-dimensional network structure. Fig. 17B confirms that the inside of the obtained sample has pores owing to the burning and removal of the mold, microporous carbon material. Next, the sample before and after heating in air was analyzed for the structure according to a powdery X-ray diffractiometric method. The analytical result of the heated sample is shown in Fig. 18A; and that of the sample before heating is in Fig. 18B.

As a result, it is known that, by heating in air at 450°C for 1 hour, the mold carbon was almost entirely removed and the ingredient of nickel alone was obtained. It is also known that NiO was formed by heating. From the analytical data of the pore size distribution according to a mercury intrusion method, the mean pore diameter of the sample was 33.99 $\mu$m.

BRIEF DESCRIPTION OF THE DRAWINGS

[Fig. 1] It is a scanning electromicroscopic photograph of the macroporous carbon material carbonized under a reaction system pressure of 300 kPa.

[Fig. 2] It is a scanning electromicroscopic photograph of the macroporous carbon material carbonized under an atmospheric reaction system pressure.

[Fig. 3] It shows schematic views of the top and the front of the mold used in Example.

[Fig. 4] It shows a top view and a front view of the reactor and the chamber used in Example.

[Fig. 5] It shows photographs of the macroporous porous materials produced in accordance with the form of the mold, in a semi-closed system in Examples 2 and 3.

[Fig. 6] It shows scanning electromicroscopic photographs of the samples produced in a semi-closed system in Examples 2 and 3.

[Fig. 7] It shows scanning electromicroscopic photographs of the samples produced in Example 4 and the starting material for them.

[Fig. 8] It is a table showing the mean pore diameter, the bulk density, the true density and the porosity of the samples obtained in Example 4.

[Fig. 9] It shows a scanning electromicroscopic photograph of the macroporous carbon material produced from popular in Example 7.

[Fig. 10] It shows a scanning electromicroscopic photograph of the macroporous carbon material produced from preservative-removed western hemlock in Example 8.

[Fig. 11] It shows a scanning electromicroscopic photograph of the macroporous carbon material produced from lignin and cellulose reagents in Example 9.

[Fig. 12] It shows scanning electromicroscopic photographs of the samples obtained in Example 11.

[Fig. 13] It shows an analytical graph, according to a powdery X-ray diffractiometric method, of the samples obtained in Example 11.

[Fig. 14] It shows scanning eleetromicroscopic photographs of the samples obtained in Example 12.

[Fig. 15] It shows a sorption isotherm graph of the samples reheated in air in Example 12.

[Fig. 16] It shows a pore size distribution graph of the samples reheated in air in Example 12.

[Fig. 17] It shows scanning electromicroscopic photographs of the surface and the cross section of the porous nickel sample obtained in Example 13.

[Fig. 18] It shows an analytical graph of the samples obtained in Example 13, according to a powdery X-ray diffractiometric method.

**Claims**

1.  A method for producing a macroporous carbon material by heating and carbonizing a wood powder in an inert gas atmosphere, wherein the mean particle size of the powder is within a range of from 20 to 125 $\mu$m, the particle size distribution thereof is within a range of (mean particle size $\pm$ 50 $\mu$m), the heating speed is within a range of from 1 to 150°C/sec.

2.  The method for producing a macroporous carbon material as claimed in claim 1, wherein the carbonization heating is attained under atmospheric pressure or under pressure over atmospheric pressure.

3.  The method for producing a macroporous carbon material as claimed in claim 1 or 2, wherein the wood powder is filled in a mold and heated for carbonization thereby giving a molded carbon material.

4.  The method for producing a macroporous carbon material as claimed in any of claims 1 to 3, wherein the wood powder is a cedar powder.

5.  The method for producing a macroporous carbon material as claimed in any of claims 1 to 4, wherein the wood powder is heated for carbonization and then further heated at a high temperature in an inert gas atmosphere.

6.  A method for producing a mesoporous carbon material, comprising further heating the macroporous carbon material produced according the method of any of claims 1 to 5, in air to give a mesoporous carbon material.

7.  A method for producing a macroporous metal material, comprising electroplating, as a cathode, the carbon material produced according the method of any of claims 1 to 6, and then heating it in air to remove the carbon material, thereby giving a metal material having a porous structure.

8.  A macroporous carbon material having a mean pore diameter of from 1 to 60 $\mu$m, a bulk density of from 0.04 to 0.50 g/cm$^3$, a porosity of from 75 to 99 %, and having a three-dimensional network structure or a three-dimensional foam structure.

9.  The macroporous carbon material as claimed in claim 6, which has a compression strength falling within a range of from 0.01 to 40.00 MPa.

**10.** The macroporous carbon material as claimed in claim 6, which has a bending strength falling within a range of from 0.01 to 40.00 MPa.

**11.** The macroporous carbon material as claimed in claim 8 or 9, which has a volume resistivity falling within a range of from $1.0 \times 10^{-4}$ to $1.0 \times 10^{-1}$ $\Omega$·cm.

**12.** A mesoporous carbon material having a mean pore diameter of from 2 to 50 nm.

**13.** A mesoporous carbon material obtained according to the method claim 6.

**14.** A porous metal material having a mean pore diameter of from 1 to 60 $\mu$m.

**15.** A porous metal material obtained according to the method of claim 7.

Fig.1

Fig.2

**Fig.3**

(Top View of Mold)

Cylindrical Mold (φ20)
Material: graphite
Outer Diameter: φ20 mm
Inner Diameter: φ10 mm
Height: 50 mm

Rectangular Mold
Material: graphite
Height: 25 mm
Width: 50 mm
Depth: 11 mm
Wall Thickness of Mold: 2 mm

Cylindrical Mold (φ44)
Height: 50 mm
Inner Diameter: φ30 mm
Outer Diameter: φ44 mm

(Side View of Mold)

Mold
Outer Diameter: φ10 mm
Height: 50 mm

Mold
Height: 20 mm
Width: 50 mm
Depth: 7 mm

Upper Spacer
Height: 24 mm
Outer Diameter: 30 mm

Sample
Height: 1 mm
Outer Diameter: φ30 mm

SLower Spacer
Height: 25 mm
Outer Diameter: 30 mm

Cylindrical Mold (φ20)        Rectangular Mold        Cylindrical Mold (φ44) and Spacer

(Side View of Reactor)

Material: graphite
Outer Diameter: φ60 mm
Height: 30 mm

Material: graphite
Outer Diameter: φ20 mm
Height: 25 mm

Material: graphite
Outer Diameter: φ60 mm
Height: 30 mm

Material: graphite
Outer Diameter: φ60 mm
Height: 30 mm

Outer Diameter: φ60 mm
Height: 30 mm

Outer Diameter: φ60 mm
Height: 15 mm

Outer Diameter: φ60 mm
Height: 30 mm

Reactor for Cylindrical Mold (φ20)        Reactor for Rectangular Mold        Reactor for Cylindrical Mold (φ44)

Fig.4

Detailed Drawing of Chamber

Material of Exhaust Pipe: stainless steel
Inner Diameter: φ25 mm
Outer Diameter: φ30 mm                    Vacuum Gauge

Gas Inlet Pipe
Material: copper
Inner Diameter: φ6 mm
Outer Diameter: φ8 mm

Pressure Gauge

Chamber
Material: stainless steel
Height: 300 mm
Width: 300 mm
Depth: 250 mm
Inner Diameter of
Rear Semicircle: φ125 mm

Exhaust Valve

Top View of Chamber

Rotary Pump

Upper Electrode
Material: copper
Outer diameter: φ60 mm

Graphite Plate
Material: graphite
Outer diameter: φ190 mm
Height: 20 mm

Reactor

320kgf

Graphite Plate
Material: graphite
Outer Diameter: φ190 mm
Height: 20 mm

Lower Electrode
Material: copper
Outer Diameter: φ60 mm

Front View of Chamber

Fig.5

A)

10mm

B)

C)

t=0.7mm

Fig.6

Fig.7

Fig.8

| Heating Speed in Carbonization | 100°C/sec | 10°C/sec | 1°C/sec | 0.1°C/sec |
|---|---|---|---|---|
| Bulk Density (g/cm³) | 0.06 | 0.09 | 0.20 | 0.22 |
| Porosity (%) | 97.1 | 95.1 | 89.4 | 88.3 |
| Mean Pore Diameter (μm) | 26.5 | 43.86 | 17.7 | 14.3 |

Fig.9

Fig.10

20μm

Fig.11

20 μm

Fig.12

Fig.13

Fig.14

Fig.15

Fig.16

+ Integrated Pore Volume (Log differential)

O Pore Volume Distribution (Log differential)

Pore Size (nm)

Fig.17

Fig.18

## INTERNATIONAL SEARCH REPORT

| International application No. |
| --- |
| PCT/JP2007/059395 |

**A. CLASSIFICATION OF SUBJECT MATTER**
*C04B35/52*(2006.01)i, *C01B31/02*(2006.01)i

According to International Patent Classification (IPC) or to both national classification and IPC

**B. FIELDS SEARCHED**

Minimum documentation searched (classification system followed by classification symbols)
C04B35/52, C01B31/02, C22C1/08

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
JSTPLUS(JDREAM2)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | Fumio KUROSAKI et al., "Kyusoku Netsu Bunkaiho ni yori Chosei shita Mokushitsu Tansokabutsu no Bisai Kozo Kaiseki", Gakujutsu Koenkai Koen Ronbunshu (The Society of Materials Science, Japan), 16 May, 2003 (16.05.03), Vol.52, pages 269 to 270 | 1-4,8-11<br>5-7,12-15 |
| X<br>A | JP 2005-166325 A (National Institute of Advanced Industrial Science and Technology), 23 June, 2005 (23.06.05), Claims 1, 2 (Family: none) | 12,13<br>1-11,14,15 |
| X<br>A | JP 2004-332069 A (Mitsubishi Materials Corp.), 25 November, 2004 (25.11.04), Example 1, 2; table 1 (Family: none) | 14,15<br>1-13 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 May, 2007 (23.05.07) | Date of mailing of the international search report<br>05 June, 2007 (05.06.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Properties and Application Techniques of Porous Materials, Fuji Technosystems,* ISBN 4-938555-69-7, 48-49
- **M. CALVO et al.** *Fuel,* 2005, vol. 84, 2184-2189
- **KITAMURA et al.** *Journal of the Wood Society of Japan,* 2001, vol. 47 (2), 164-170
- **F. KUROSAKI et al.** *Carbon,* 2003, vol. 41 (15), 3057-3062